Europäisches Patentamt

(19) European Patent Office

Office européen des brevets

(11) Numéro de publication: **0 213 985 B1**

## (12) FASCICULE DE BREVET EUROPEEN

(45) Date de publication du fascicule du brevet:
13.09.89

(21) Numéro de dépôt: 86401535.9

(22) Date de dépôt: 09.07.86

(51) Int. Cl.⁴: **H01M 6/18, H01B 1/12, C08K 5/51**

(54) **Matériau macromoléculaire à conduction ionique.**

(30) Priorité: 12.07.85 FR 8510737
11.12.85 FR 8518352

(43) Date de publication de la demande:
11.03.87 Bulletin 87/11

(45) Mention de la délivrance du brevet:
13.09.89 Bulletin 89/37

(84) Etats contractants désignés:
AT BE CH DE GB IT LI LU NL SE

(56) Documents cités:
EP-A- 0 078 505
GB-A- 2 118 763
GB-A- 2 119 162

JOURNAL OF POWER SOURCES,
vol. 14, no. 1/3, janvier-mars 1985, pages 13-21, Elsevier Sequoia, Lausanne, CH, printed in the Netherlands; I.E. KELLY et al.: "Poly(ethylene oxide) electrolytes for operation at near room temperature"
SOLID-STATE IONICS,
vol. 14, no. 2, octobre 1984, pages 85-91, North-Holland, Amsterdam, NL; K. SHIGEHARA et al.: "Ionic conductivity of LiX-oligo(ethylene oxide)-perfluoro polymer ternary hybrids"

(73) Titulaire: **SOCIETE NATIONALE ELF AQUITAINE Société anonyme dite, Tour Elf 2, Place de la Coupole La Défense 6, F-92400 Courbevoie(FR)**
Titulaire: **HYDRO-QUEBEC, 75, Boulevard Dorchester Ouest, Montréal Québec H2Z 1A4(CA)**

(72) Inventeur: **Muller, Daniel, 12, rue Frédéric Mistral, F-64000 Pau(FR)**
Inventeur: **Chabagno, Jean-Michel, Les Terrasses Fleuries B Rue du Pasteur Cadier, F-64000 Pau(FR)**
Inventeur: **Cheradame, Hervé, 12, rue Boileau, F-38700 Latronche(FR)**
Inventeur: **Lenest, Jean-Francois, 9 Place Jean Moulin, F-38000 Grenoble(FR)**
Inventeur: **Leveque, Michel, Résidence Le Sequoia Rue de la Gare, F-74190 Le Fayet(FR)**

(74) Mandataire: **Boiliot, Marc, SOCIETE NATIONALE ELF AQUITAINE Division Propriété Industrielle Tour Elf, F-92078 Paris la Défense Cédex 45(FR)**

## Description

La présente invention concerne un nouveau matériau macromoléculaire à conduction ionique comportant une nouvelle famille de sels en solution dans un polymère.

Des matériaux macromoléculaires à conduction ionique tels que décrits dans le brevet européen 013 199 sont constitués par une solution solide d'un sel de métal alcalin dans un polymère dont la chaîne comporte de manière récurrente au moins un hétéro-atome ayant des propriétés solvatantes des sels de lithium. Une famille de polymères préférée de ce brevet européen est celle des polyéthers en particulier le polyoxyéthylène et/ou les copolymères de l'oxyde d'éthylène.

Le sel que l'on met en solution doit présenter certaines qualités spécifiques. Il doit être électrochimiquement stable et avoir une dissociation ionique élevée. De plus, il doit pouvoir former avec le polymère une solution solide qui reste homogène dans un large domaine de concentration et de température afin d'éviter la précipitation de phases cristallines non conductrices au sein de l'électrolyte. Du fait du modèle des réactions électrochimiques mises en jeux dans des générateurs électrochimiques utilisant des électrolytes réalisés selon le brevet européen 013 199, il est nécessaire que le sel confère à l'électrolyte une conductivité cationique très importante vis-à-vis de la conductivité anionique, l'idéal étant que la conductivité soit exclusivement cationique.

On a donc pensé à diminuer la mobilité des anions en faisant appel à des sels de grand poids moléculaire ou très encombrants tels que ceux décrits dans les demandes de brevet 2 527 610, 2 527 611 et 2 527 602 déposées le 1er Juin 1982 par l'Agence Nationale de Valorisation de la Recherche ou encore dans la demande de brevet 2 523 770 déposée par l'Agence Nationale de Valorisation de la Recherche le 18 Mars 1982.

L'utilisation de ces sels à gros anions est limitée par le fait que si l'on veut atteindre une concentration raisonnable de cations lithium, il faut introduire dans le polymère une forte concentration de l'anion associé au lithium, ce qui peut alors perturber la constante diélectrique du milieu et donc son pouvoir de solvatation et de dissociation, ce qui est en particulier le cas pour les anions à très gros poids moléculaires.

Le but de l'invention est donc de présenter une nouvelle famille de sels dont les anions soient le plus faiblement mobiles quand le sel est en solution dans un polymère et qui soient parfaitement compatibles avec le polymère.

Pour cela, l'invention prévoit un matériau macromoléculaire à conduction ionique constitué par au moins un sel en solution dans un matériau macromoléculaire, ledit matériau macromoléculaire étant constitué en majeure partie par une structure amorphe du type polyéther. Selon l'invention, ledit sel est un sel représenté par la formule (I):

(I) R–F–M

dans laquelle:

– M est un métal alcalin, en particulier le lithium,

– R est une chaîne polyéther dérivant d'au moins un monomère choisi parmi l'oxyde d'éthylène, l'oxyde de propylène et le méthylglycidyléther,

– F représente un groupement fonctionnel choisi parmi les alcoolate, sulfonate, sulfate, phosphate, phosphonate, imidure, carboxylate, borate, aluminate, thiophosphate, perhalogénosulfonate et perhalogénocarboxylate.

On connaît des matériaux à conduction ionique consistant en compositions ternaires renfermant un système polyoxyéthylène/perchlorate de lithium dans une matrice consistant en un polymère formé de motifs perfluoroéthylène dont jusqu'à environ 25% molaire portent une chaîne pendante oxyperfluoroalcoyle ou dioxyperfluoroalcoyle terminée par un groupement fonctionnel –COOLi ou –SO₃Li (cf. Solid State Ionics, Volume 14, n° 2 (Octobre 1984), pages 85 à 91). Ces polymères fluorés à chaînes pendantes terminées par un groupement –COOLi ou –SO₃Li, qui sont utilisés à titre de matrice dans les compositions ternaires décrites dans cette citation, ne sont pas des polymères du type des polyéthers et de ce fait lesdits polymères fluorés ne sont assimilables ni au sel R–F–M à chaîne R du type polyéther ni au matériau macromoléculaire constitué en majeure partie par une structure amorphe du type polyéther, qui sont associés pour former le matériau à conduction ionique selon l'invention.

Les polyéthers des anions des sels de l'invention peuvent être de hautes masses moléculaires. Ils n'affectent pas le pouvoir solvatant du matériau macromoléculaire dans lequel les sels sont en solution, puisqu'ils ont la même structure que ledit matériau.

Du fait de cette haute masse moléculaire, l'anion R–F⁻ est quasiment immobile dans le matériau macromoléculaire, ce qui fait que la solution solide réalisée présente une conduction ionique essentiellement cationique.

Avec les fonctions alcoolates, on peut obtenir selon la présente invention des fonctions sels de métaux alcalins des acides complexes (II)

–OMₜX⁻ₙ,M⁺ (II).

Ces acides étant obtenus par réaction d'un alcoolate alcalin –OM avec un acide de Lewis du Type Friedel et Krafts MₜXₙ, où Mₜ représente, dans la classification périodique des éléments, un élément de la colonne 3, comme par exemple le bore, ou un élément de la colonne quatre, comme par exemple l'étain, ou un élément de la colonne cinq comme l'arsenic et X est un halogène tel que Cl ou F.

2

Parmi les acides de Lewis préférés, on choisira $BF_3$, $BCl_3$, $SbCl_5$, $AsF_5$, $TiCl_4$, $SnCl_4$. On obtient alors des sels de formule (III):

(III) $R-OM_tX-_n,M^+$.

Selon un mode de réalisation préféré de l'invention, la fonction conférée par le groupement F, ou fonction ionisable, est une fonction carboxylée représentée par la formule:

(V): $-CF_2CO_2M$

et dérive d'un acide carboxylique fluoré en de formule

(VI): $-CF_2CO_2H$,

M ayant la même signification que dans la formule (I), de sorte que l'on obtient un sel de formule:

(X): $R-CF_2CO_2M$,

dans laquelle R a la même signification que la formule (I).

Selon un autre mode de réalisation de l'invention, la chaîne polyéther de l'anion est elle-même constituée par un polyéther fonctionnalisé de formule:

(XI): $R_1-F_1-M_1$

dans laquelle $R_1$, $F_1$ et $M_1$ ont les mêmes significations que dans la formule (I) de sorte que l'anion, objet de ce mode de réalisation de l'invention, peut être représenté par la formule:

(XII): $M_1-F_1-R_1-F-M$.

De préférence, $M_1$, $F_1$ et F, M sont identiques.

Ces sels sont des di-anions dont chaque motif anionique est séparé de l'autre par une chaîne polyéther. Ils présentent une mobilité particulièrement faible en raison de l'accroissement des enchevêtrements moléculaires auxquels se prêtent les matériaux.

Selon une autre caractéristique de l'invention, le matériau macromoléculaire comporte en outre un deuxième sel représenté par la formule (XIII):

(XIII) M Y dans laquelle M a la même signification que dans la formule (I) et Y représente un anion d'un acide fort.

Les anions préférés sont ceux décrits dans le brevet européen 013 199 et en particulier l'anion $ClO_4^-$.

Un autre avantage des sels selon l'invention et des matériaux macromoléculaires à conduction ionique ainsi réalisés réside dans l'amélioration des propriétés de mouillage que présente l'électrolyte vis-à-vis du ou des matériaux d'électrodes dans les électrodes composites, c'est-à-dire dans les électrodes dans lesquelles chaque grain de matière active est entièrement enrobé dans un matériau macromoléculaire à conduction ionique, que ce matériau soit le même que celui constituant l'électrolyte ou qu'il en soit différent par la nature et la constitution de la chaîne.

Mais selon encore une autre caractéristique de l'invention, le sel représenté par la formule (I) est greffé sur au moins une partie du matériau macromoléculaire constituant l'électrolyte, chacune des macromolécules ainsi greffées pouvant porter une ou plusieurs chaînes à extrémité anionique.

Pour obtenir ce greffage, on pourra par exemple réaliser une polycondensation d'un polyétherglycol d'une chaîne polyéther dont l'une des extrémités porte l'anion et dont l'autre extrémité porte un groupement alcool ou tout groupement capable de réagir avec un agent de polycondensation.

De tels types de polycondensation sont, par exemple, décrits dans la demande de brevet français n° 2 570 224 du 11 Septembre 1984.

Selon une première variante de ce mode de réalisation, la première et la seconde structure de type polyéther dérivent du ou des mêmes motifs monomères et la première structure est linéaire et porte une seule seconde structure greffée sur la première.

Selon une seconde variante du même mode de réalisation, au moins deux secondes structures sont greffées sur la première structure, le copolymère ainsi obtenu ayant une structure en peigne.

Un tel matériau macromoléculaire obtenu selon la présente invention peut être représenté par la formule $A(R-F-M)x(XV)$, formule dans laquelle:

– A est une chaîne polyéther de haut poids moléculaire,

– R, F et M ont la même signification que dans la formule (I), le poids moléculaire de R étant inférieur à celui de A,

– x est le nombre de greffons portés par la chaîne polyéther.

L'avantage essentiel d'une telle réalisation réside dans la limitation de la mobilité du site anionique par rapport à la chaîne du polymère solvant. En effet, le site anionique est accroché à la chaîne principale par l'intermédiaire de la chaîne polyéther de l'anion (Chaîne-R formule I) et sa mobilité est physiquement limitée par la mobilité de la chaîne polyéther de l'anion et ses propriétés d'étirement. De plus, avec une telle réalisation, on peut augmenter la concentration en sel dans le polymère solvant sans risquer d'augmenter la température de transition vitreuse, comme on le ferait si on fixait le groupement anionique directement sur la chaîne du polymère solvant sans interposition du motif polyéther.

Mais l'invention et ses avantages seront mieux compris à la lumière de la lecture des exemples suivants donnés à titre d'illustration.

Exemple 1. Mesures de conductivité.

On a réalisé des mesures de conductivité pour des matériaux à conduction ionique pour différents sels selon l'invention. Le matériau macromoléculaire solvant était constitué par un copolymère oxyde d'éthylène/oxyde de propylène à 95% d'oxyde d'éthylène en poids. Les résultats obtenus sont les suivants pour les températures d'obtention de conductivité respectivement égales à $10^{-7}$, $10^{-6}$, $10^{-5}$ ohm$^{-1}$ cm$^{-1}$, notées $T_7$, $T_6$, $T_5$, le rapport atomique d'oxygène au lithium étant noté O/Li pour chaque exemple.

| 1) Alcoolates | | |
|---|---|---|
| $C_8H_{17}-O-Li$ | $T_7 > 130°C$<br>O/Li = 20 | |
| $CH_3-O-CH_2-CH_2-O-Li$ | $T_7 = 60°C$<br>O/Li = 12 | $T_6 = 130°C$ |
| $CH_3(O-CH_2-CH_2)_3-O-Li$ | $T_7 = 40°C$<br>O/Li = 12 | $T_6 = 60°C$ |
| $CH_3(O-CH_2-CH_2)_{14}-O-Li$ | $T_7 = 40°C$<br>O/Li = 7 | $T_6 = 60°C$ |
| 2) Borates | O/Li = 20 | |
| $B(O-CH_3)_4$ | $T_7 = 130°C$ | |
| $CH_3-O(CH_2-CH_2-O)_2BOCH_3Li$ | $T_7 = 39°C$ | $T_6 = 130°C$ |
| $CH_3-O(CH_2-CH_2-O)_3BOCH_3Li$ | $T_7 = 28°C$ | $T_6 = 74°C$ |
| 3) Fluoroborates | | |
| $LiBF_4$ | $T_7 = 150°C$<br>$T_5 = 40°C$ | $T_6 = 30°C$<br>O/Li = 20 |
| $CH_3-O(CH_2-CH_2-O)_2BF_3Li$ | $T_7 = 11°C$<br>$T_5 = 35°C$ | $T_6 = 22°C$<br>O/Li = 20 |
| $CH_3-O(CH_2-CH_2-O)_3BF_3Li$ | $T_7 = 10°C$<br>$T_5 = 30°C$ | $T_6 = 20°C$<br>O/Li = 12 |
| 4) Sulfonates et dérivés | O/Li = 20 | |
| $Cl-CH_2-CH_2-SO_3Li$ | $T_7 = 30°C$ | $T_6 = 68°C$ |
| $CH_3(O-CH_2-CH_2)_{10}-O-CH_2-CH_2-SO_3Li$ | $T_7 = 35°C$ | $T_6 = 60°C$ |

Exemple 2

A titre comparatif, on a réalisé deux générateurs à électrolyte solide polymère constitués chacun d'une électrode négative en lithium et d'une électrode positive. L'électrode positive était la même pour les deux accumulateurs et était constituée par un aggloméré d'oxyde de molybdène de noir de carbone et d'un matériau macromoléculaire à conduction constitué par une solution solide de $LiClO_4$ en 10% en poids dans un copolymère d'oxyde d'éthylène et de méthyl glycidyléther (copolymère OE–MGE) dans un rapport 4/1 en poids. Les deux générateurs différaient par leur électrolyte.
1) Art antérieur
Electrolyte: copolymère OE–MGE, $LiCLO_4$ à raison de 10% en poids, épaisseur 65 µm (microns).
2) Invention
Electrolyte: copolymère OE–MGE, sel: $CH_3-O(CH_2-CH_2-O)_3 BF_3Li$, à raison de 20% en poids, épaisseur: 65 µm.
Ces deux générateurs ont été déchargés à 30°C sous un courant de 125 micro Ampère par cm$^2$. La décharge a été arrêtée quand on a obtenu 1 V.
Pour le générateur 1, la décharge a durée 8 h et pour le générateur 2, la décharge a durée 25 h.
Ce résultat est attribuable à la mobilité réduite des anions sulfonates à longues chaîne polyéther qui a évité l'accumulation de sels au niveau des électrodes. Il met donc en évidence les avantages de l'invention.

Exemple 3

11,5 g d'un copolymère greffé constitué d'un tronc polydiméthylsiloxane de masse molaire 700 environ, greffé de 9 greffons polyoxyde d'éthylène de masse molaire d'environ 200, sont séchés sous vide de 1,3 Pa ($10^{-2}$ mm Hg) à 100°C pendant 8 heures. On ajoute ensuite à froid et sous azote sec 6 ml de tétrahydrofurane puis 5,8 ml d'une solution 1,6 M de butyl lithium dans l'hexane. On ajoute ensuite 11,8 ml d'une solution à 10% en volume de SbCl$_5$ dans du chlorure de méthylène sur le mélange réactionnel précédent maintenu à 0°C. On obtient ainsi un polyol greffé dont 25% des fonctions alcool sont transformées en alcoolates de lithium, puis en fonction R–O–SbCl$_5$–Li par action de SbCl$_5$.

Les autres fonctions alcool non transformées sont utilisées pour la réticulation par réaction avec des agents réticulants tels que les polisocyanates les alkylchlorosilanes, les alkylamuminium, etc.

Dans cet exemple, on réalise un polyuréthane en ajoutant après évaporation de tous les solvants, 12,8 ml d'une solution 0,84 M de 4, 4', 4" méthylidine tris phénylisocyanate dans CH$_2$Cl$_2$ et 5.10$^{-2}$ ml de dibutyl dilaurate d'étain.

Le mélange réactionnel est placé, en atmosphère contrôlée, dans un moule constitué de deux plaques séparées par un joint calibré de façon à donner un film mince après réticulation. Le mélange est laissé dans le moule pendant 24 heures à température ordinaire. La réticulation est achevée par étuvage sous vide à 60°C.

Afin d'assurer un nombre de transport cationique égal à un, on peut extraire la membrane à l'abri de l'humidité, au soxhlet par du chlorure de méthylène à reflux sur du sodium pendant 12 heures. La membrane ainsi préparée a une conductivité cationique de 10$^{-5}$ Ohm$^{-1}$ cm$^{-1}$ à 100°C.

### Exemple 4

13,6 g d'un copolymère séquencé (polyoxyde de propylène-polyoxyde d'éthylène) triol de masse moléculaire 2 600 environ sont séchés sous vide poussé inf. à 1,3 Pa (10$^{-2}$ mmHg) à 100°C pendant 8 heures. On ajoute ensuite à froid et sous azote sec 6 ml de tétrahydrofurane puis 3,2 ml d'une solution 1,6 M de butyl lithium dans l'hexane. On ajoute ensuite 6,7 ml d'une solution à 10% en volume de SbCl$_5$ dans du chlorure de méthylène sur le mélange réactionnnel précédent maintenu à 0°C. On a ainsi obtenu un copolymère séquencé dont l'une des trois fonctions alcool initiales a été remplacée par une fonction R–O–Sb–Cl$_5$–Li, ce copolymère modifié est ensuite engagé dans un réaction de réticulation pour laquelle, après évaporation de tous les solvants, on ajoute 4,2 ml d'une solution 0,84 molaire de 4, 4', 4"-méthylidine tris (phénylisocyanate et 5.12$^{-2}$ ml de dibutyldilaurate d'étain. Le mélange réactionnel est traité comme dans l'exemple 1 afin d'obtenir une membrane mince à conduction cationique. La membrane ainsi préparée a une conductivité de 10$^{-4}$ Ohm$^{-1}$ cm$^{-1}$ à 100°C et 10$^{-6}$ Ohm$^{-1}$ cm$^{-1}$ à 20°C.

### Exemple 5

Cet exemple concerne un sel de sodium.

11,5 g d'un copolymère greffé oligomère constitué d'un tronc polydiméthylsiloxane de masse molaire environ 700, greffé de 9 greffons polyoxyde d'éthylène de masse molaire d'environ 200 est séché sous vide inférieur à 1,3 Pa (10$^{-2}$ mm Hg) à 100°C pendant 8 heures. On ajoute ensuite à froid et sous azote sec 6 ml de tétrahydrofurane puis 0,23 g d'hydrure de sodium. Après réaction, on ajoute 11,8 ml d'une solution à 10% en volume de SbCl$_5$ dans du chlorure de méthylène sur le mélange réactionnel précédent maintenu à 0°C.

Après évaporation de tous les solvants, on ajoute 21,5 ml d'une solution 0,50 M de 4, 4', 4"-méthylidine tris (phénylisocyanate) et 5.10$^{-2}$ ml de dibutyldilaurate d'étain. Après traitement du mélange réactionnel comme dans l'exemple 6 précédent, on obtient une membrane à conduction cationique. La conductivité est d'environ 10$^{-6}$ Ohm$^{-1}$ cm$^{-1}$ à 80°C.

### Exemple 6

Polyéther fonctionnalisé par le perfluoroglutarate de lithium.

2,2 g d'acide hexafluoroglutarique HOOC (CF$_2$)$_3$COOH sont demi-neutralisés en solution dans l'eau par la quantité correspondant d'hydroxyde de lithium. Le diacide est ainsi transformé en monosel de lithium.

Après séchage sous vide poussé de ce monosel, on introduit 10 cc de tétrahydrofurane anhydre, puis 0,66 ml de chlorure de thionyle sous atmosphère d'azote sec. Le mélange réactionnel est vigoureusement agité pendant une heure.

On obtient ainsi un dérivé de l'acide perfluoroglutarique porteur d'une part d'une fonction carboxylate de lithium et d'autre part d'une fonction chlorure d'acide.

Cette dernière fonction est mise à profit pour greffer le perfluoroglutarate de lithium sur l'une des fonctions alcool d'un polyoxyde d'éthylène triol de masse 1500 environ dont les 2 fonctions alcool résiduelles sont utilisées pour former un réseau auto-ionisable selon les techniques décrites dans les exemple précédents.

Une membrane de type polyuréthanne ainsi préparée a une conductivité d'environ 5.10$^{-6}$ Ohm$^{-1}$ cm$^{-1}$ à 100°C.

La même membrane peut être obtenue en remplaçant par exemple l'acide perfluoroglutarique par l'acide perfluorobutane dioïque ou l'acide 2, 2, 3, 4, 4 pentafluoro 3-chloroglutarique.

## Revendications

1. Matériau à conduction ionique constitué par au moins un sel en solution dans un matériau macromoléculaire, ledit matériau macromoléculaire étant constitué en majeure partie par une structure amorphe du type polyéther, caractérisé en ce que ledit sel est un sel représenté par la formule (I)
(I) R–F–M
dans laquelle:
M est un métal alcalin en particulier le lithium,
R est une chaîne polyéther dérivant d'au moins un monomère choisi parmi l'oxyde d'éthylène, l'oxyde de propylène et le méthylglycidyléther,
F représente un groupement fonctionnel choisi parmi les alcoolate, sulfonate, sulfate, phosphate, phosphonate, imidure, carboxylate, thiophosphate, borate, aluminate, perhalogénosulfonate et perhalogénocarboxylate.

2. Matériau à conduction ionique selon la revendication 1, caractérisé en ce que le matériau macromoléculaire, dans lequel le sel est en solution, est constitué par un homopolymère ou un copolymère de l'oxyde d'éthylène.

3. Matériau à conduction ionique selon la revendication 1, caractérisé en ce que la chaîne polyéther R est elle-même constituée par un polyéther fonctionnalisé de formule (XI) R1F1–M1 dans laquelle R1, F1 et M1 ont respectivement la même signification que R, F et M.

4. Matériau selon la revendication 3, caractérisé en ce que (M1, F1) et (M, F) sont identiques.

5. Matériau à conduction ionique selon la revendication 1, caractérisé en ce qu'il comporte en outre un sel métallique d'un acide fort.

6. Matériau à conduction ionique, selon la revendication 1, caractérisé en ce que ledit sel R–F–M est greffé sur au moins une partie dudit matériau macromoléculaire constituant l'électrolyte.

7. Matériau à conduction ionique selon la revendication 6, caractérisé en ce que la structure amorphe du type polyéther constituant la majeure partie du matériau macromoléculaire et la structure R du sel R–F–M dérivent du ou des mêmes monomères.

8. Matériau selon la revendication 6 ou 7, caractérisé en ce que les chaînes du matériau macromoléculaire sur lesquelles est greffé le sel R–F–M portent chacune une seule structure greffée issue dudit sel.

9. Matériau selon la revendication 6 ou 7, caractérisé en ce que les chaînes du matériau macromoléculaire sur lesquelles est greffé le sel R–F–M portent chacune au moins deux structures greffées issues dudit sel.

## Patentansprüche

1. Material zur Ionenleitung, gebildet durch wenigstens ein gelöstes Salz in einem makromolekularen Material, wobei das genannte makromolekulare Material größtenteils durch eine amorphe Struktur vom Typ Polyether gebildet ist, dadurch gekennzeichnet, daß das genannte Salz ein Salz ist, dargestellt durch die Formel (I)
(I) R–F–M,
worin:
M ein alkalisches Metall, insbesondere Lithium, ist,
R eine Polyetherkette von mindestens einem Monomer, ausgewählt aus Ethylenoxid, Propylenoxid und Methylglycidylether ist,
F eine funktionelle Gruppe darstellt, ausgewählt aus Alkoholat, Sulfonat, Sulfat, Phosphat, Phosphonat, Imidat, Carboxylat, Thiophosphat, Borat, Aluminat, Perhalogensulfonat und Perhalogencarboxylat.

2. Material zur Ionenleitung nach Anspruch 1, dadurch gekennzeichnet, daß das makromolekulare Material, worin das Salz als Lösung vorliegt, durch ein Homopolymer oder ein Copolymer des Ethylenoxids gebildet ist.

3. Material zur Ionenleitung nach Anspruch 1, dadurch gekennzeichnet, daß die Polyether-Kette R ihrerseits durch ein funktionelles Polyether der Formel (XI) R1F1–M1, gebildet ist, worin R1, F1 und M1 jeweils die gleiche Bedeutung haben wie R, F und M.

4. Material nach Anspruch 3, dadurch gekennzeichnet, daß (M1, F1) und (M, F) identisch sind.

5. Material zur Ionenleitung nach Anspruch 1, dadurch gekennzeichnet, daß es außerdem ein metallisches Salz einer starken Säure enthält.

6. Material zur Ionenleitung nach Anspruch 1, dadurch gekennzeichnet, daß das genannte Salz R–F–M auf mindestens einen Teil des besagten makromolekularen Materials gepropft wird und das Elektrolyt bildet.

7. Material zur Ionenleitung nach Anspruch 6, dadurch gekennzeichnet, daß die amorphe Struktur des Typs Polyether, die den größten Teil des makromolekularen Materials bildet, und die Struktur R des Salzes R–F–M, vom selben oder denselben Monomeren stammen.

8. Material nach Anspruch 6 oder 7, dadurch gekennzeichnet, daß die Ketten des makromolekularen Materials, auf die das Salz R–F–M gepropft wird, jede eine einzige von dem genannten Salz stammende gepropfte Struktur tragen.

9. Material nach Anspruch 6 oder 7, dadurch gekennzeichnet, daß die Ketten des makromolekularen Materials, auf die das Salz R–F–M gepropft wird, jede wenigstens zwei von dem genannten Salz stammende gepropfte Strukturen tragen.

**Claims**

1. Ionic conduction material consisting of at least one salt in solution in a macromolecular material, the said macromolecular material consisting for the most part of an amorphous structure of the polyether type, characterised in that the said salt is a salt represented by the formula (I)
(I) R–F–M
in which:
M is an alkaline metal, particularly lithium,
R is a polyether chain derived from at least one monomer chosen from ethylene oxide, propylene oxide or methyl glycidyl ether,
F represents a function group chosen from alcoholate, sulphonate, sulphate, phosphate, phosphonate, imide, carboxylate, thiophosphate, borate, aluminate, perhalogenosulphonate and perhalogenocarboxylate.

2. Ionic conduction material according to Claim 1, characterised in that the macromolecular material in which the salt is in solution consists of a homopolymer or a copolymer of ethylene oxide.

3. Ionic conduction material according to Claim 1, characterised in that the polyether chain R is itself constituted by a functionalised polyether of formula (XI) R1F1–M1 in which R1, F1 and M1 have respectively the same meaning as R, F and M.

4. A material according to Claim 3, characterised in that (M1, F1) and (M, F) are identical.

5. Ionic conduction material according to Claim 1, characterised in that it also comprises a metallic salt of a strong acid.

6. Ionic conduction material according to Claim 1, characterised in that the salt R–F–M is grafted on at least one part of the said macromolecular material which constitutes the electrolyte.

7. Ionic conduction material according to Claim 6, characterised in that the amorphous structure of the polyether type constituting the major part of the macromolecular material and the structure R of the salt R–F–M derive from the same monomer or monomers.

8. A material according to Claim 6 or 7, characterised in that the chains of the macromolecular material on which the salt R–F–M is grafted each carry a single grafted structure emanating from the said salt.

9. A material according to Claim 6 or 7, characterised in that the chains of the macromolecular material on which the salt R–F–M is grafted each carry at least two grafted structures emanating from the said salt.